# EUROPÄISCHE PATENTANMELDUNG

(11) **EP 0 913 621 A1**
(43) Veröffentlichungstag der Anmeldung: **06.05.1999**
(21) Anmeldenummer: 97118794.3
(22) Anmeldetag: 29.10.1997
(51) Int. Cl.: F16L 55/00, F16L 55/16, E21B 7/30

(54) **Verfahren zum Austausch einer im Boden verlegten Versorgungsleitung und Bodenrakete zur Durchführung des Verfahrens**

(71) Anmelder: Thyssen Schachtbau Rohrtechnik GmbH, 45356 Essen (DE)
(72) Erfinder: Imort, Klaus Robert, 45529 Hattingen (DE)
(74) Vertreter: Thiel, Christian, Dr. Dipl.-Chem.

(57) **Zusammenfassung**

Die Erfindung betrifft ein Verfahren zum Austausch einer im Boden verlegten Versorgungsleitung, bei dem die auszutauschende Versorgungsleitung (4) in einer Start- (12) und einer Zielbaugrube (13) zugänglich gemacht und geöffnet wird, wobei in die auszutauschende Leitung (4) ein Windenseil (6) eingebracht wird, in der Startbaugrube (12) eine Bodenrakete installiert wird, die auszutauschende Leitung (4) stirnseitig in einer Aufnahme (8) aufnimmt und mit dem Windenseil (6) verbunden ist, rückseitig mit der einzubringende Leitung (14) oder einem Leitungselement versehen ist sowie eine Vortriebseinrichtung aufweist, und die Bodenrakete (1) mit Hilfe des Windenseils (6) und der Vortriebseinrichtung die auszutauschende Leitung (4) zur Zielbaugrube (13) hin austreibt und die einzubringende Leitung (14) einzieht, sowie eine Bodenrakete (1) zur Durchführung dieses Verfahrens.

## Beschreibung

Die Erfindung betrifft ein Verfahren zum Austausch einer im Boden verlegten Versorgungsleitung, bei dem die auszutauschende Versorgungsleitung in einer Start- und einer Zielbaugrube zugänglich gemacht und geöffnet wird sowie eine Bodenrakete zur Durchführung dieses Verfahrens.

Mit der Industrialisierung in der zweiten Hälfte des vorigen Jahrhunderts und der damit verbundenen Bevölkerungszunahme wurde damit begonnen, zunächst die Bevölkerungzentren der Industrieländer mit einem System von Rohrleitungen zur Ver- und Entsorgung zu versehen. Für die Gas- und Wasserversorgung wurden dabei hauptsächlich gußeiserne Leitungen verwandt, überwiegend Grauguß, ein ausgesprochen dauerhaftes Material, das insbesondere auch bei der Wasserversorgung die Wasserqualität nicht beeinträchtigt und in Abwesenheit von Sauerstoff wenig korrodiert.

Viele der in den 80iger Jahren des vorherigen Jahrhunderts verlegten Leitungen sind entsprechend noch heute in Betrieb, weisen aber inzwischen doch erhebliche Schäden auf, sodaß es zunehmend zu Undichtigkeiten und dadurch bedingt zu Verlusten kommt. Bei Gasleitungen kommt hinzu, daß sie, soweit sie auf die Verteilung von Stadtgas ausgelegt sind, bei Betrieb mit Erdgas häufig undicht werden. Ältere Leitungen weisen mit Teer getränkte textile Dichtungen auf, die für ihre Dichtwirkung auf dem relativ hohen Feuchtigkeitgehalt des Stadtgases angewiesen sind. Bei dem relativ geringem Feuchtigkeitsgehalt des jetzt eingespeisten Erdgases schrumpfen diese Materialien und werden undicht.

Entsprechendes gilt für Abwasserleitungen, soweit sie aus Gußeisen hergestellt sind, was bei kleineren Querschnitten häufig der Fall ist, und für die Kanalisation, die, soweit Leitungen mit kleinerem Querschnitt betroffen sind, häufig aus Ton, Steinzeug, Asbestzement oder ähnlichem Material bestehen. Auch hier sind Leitungen älteren Datums inzwischen durch Korrosion und mechanische Belastung, wie sie durch Verkehrserschütterungen, Druckbelastung oder Erdbewegungen im Rahmen von Tiefbaumaßnahmen oder in Bergbaugebieten auftreten, vielfach schadhaft und sanierungsbedürftig. Hinzu kommt die mechanische Beanspruchung durch die Geschiebefracht vor allem der Straßenabwässer.

Ein weiteres Problem stellt die zunehmende Bevölkerung in den Ballungszentren dar, und die damit - und durch höheren Verbrauch pro Person - einhergehende Zunahme der Ver- und Entsorgungsmengen. Viele der auch in jüngeren Zeiten verlegten Versorgungs- und Entsorgungsleitungen reichen kapazitätsmäßig nicht mehr zur Versorgung der angeschlossenen Haushalte und Betriebe aus.

Insgesamt besteht heute ein erheblicher Austauschbedarf, was verlegte Ver- und Entsorgungsleitungen anbetrifft. Der Austauschbedarf wurde nicht zuletzt dadurch verstärkt, daß die Kommunen, in deren Besitz die Leitungsnetze zumeist sind, in der Vergangenheit zu wenig Geld in den Erhalt ihrer Netze investiert haben. Der Sanierungsbedarf hat sich dadurch kumuliert.

Ein Austausch bestehender Ent- und Versorgungsleitungen ist, soweit er durch Aufgraben und Austausch der Leitungen erfolgt, zeitlich und finanziell außerordentlich aufwendig. Die Finanznöte der Kommunen stehen solchen aufwendigen Maßnahmen in der Regel entgegen.

Grundsätzlich besteht deshalb ein Bedarf an Verfahren, die den grabenlosen Austausch von Ver- und Entsorgungsleitungen erlauben.

Im Stand der Technik sind eine Reihe von Verfahren bekannt geworden, die den Austausch von bestehenden Versorgungsleitungen erlauben, ohne daß die gesamte Verlegungslänge aufgegraben werden muß. In der Regel werden die Leitungen in Abschnitten zugänglich gemacht, aufgeschnitten und auf die eine Art und Weise durch neue Versorgungsleitungen ersetzt. Desweiteren sind Verfahren bekannt, alte Versorgungsleitungen mit einer Auskleidung, einem sogenannten Inlining, zu versehen.

Aus der EP-A-0 094 694 ist ein als 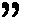 Berstlining" bezeichnetes Verfahren bekannt geworden, bei dem Graugußleitungen durch Hindurchziehen einer statischen Vorrichtung (Rakete) oder dynamischen Vorrichtung (hydraulischer Berstkörper) unter gleichzeitigem Aufweiten des Rohrkanals und Einziehen eines Schutzrohres oder eines neue Produktenrohres gesprengt wird. Ein weitgehend entsprechendes Verfahren für Stahlleitungen, die durch Hindurchziehen einer Rakete oder dergleichen aufgeschnitten werden, ist aus EP-A-0 398 885 bekannt.

Nachteilig bei diesen als 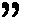 Berstlining" bezeichneten Verfahren ist, daß das Altrohr im Boden verbleibt, entweder in Form von Bruchstücken (Grauguß, Asbestzement), oder in Form von aufgeschnittenem Stahlrohren. Dies ist aus technischen Gründen unbefriedigend und kann aus Umweltschutzgründen problematisch werden.

Ein Preßziehverfahren ist aus WO-A-96/30690 bekannt geworden. Bei diesem Verfahren werden Altleitungen über Baugruben zugänglich gemacht und durch eine hydraulisch betriebene Vorrichtung unter gleichzeitigem Nachziehen der neuen Leitung aus dem Leitungskanal herausgezogen. Das Verfahren erfordert aber eine speziell betriebene Ziehvorrichtung, die in der Zielbaugrube installiert werden muß und einen komplizierten Ausgleichsmechanismus benötigt, um die elastische Dehnung des Zugelements auszugleichen. Die hydraulisch betriebene Einrichtung wird dabei in der Zielbaugrube fest installiert, daß herausgezogene Rohr an Ort und Stelle zerkleinert, um anschließend entsorgt zu werden.

Das Verfahren hat den Nachteil, daß nur geringe Längen der auszutauschenden Versorgungsleitung gezogen werden können. Bei größerem Durchmesser vermindert sich die Arbeitlänge weiter. Das erforderliche taktweise Arbeiten bringt einen nur langsamen Bauvorschritt mit sich, was nicht nur wegen des Ausfalls der Versorgung sondern auch wegen der Arbeitskosten unerwünscht ist. In der Regel werden für die angeschlossenen Haushalte Notversorgungen erforderlich. Das eines Schutzrohres ist nicht vorgesehen. Schließlich besteht die Gefahr, daß in der Baugrube Hydrauliköl aus der Ziehvorrichtung austritt und den Boden kontaminiert.

Demgegenüber liegt der Erfindung die Aufgabe zugrunde, ein Verfahren zur Auswechslung von Versorgungsleitungen ohne Aufgrabung bereitzustellen, bei dem gleichzeitig mit der Entfernung des Altrohrs ein neues Rohr eingezogen werden kann. Das Verfahren soll für alle Altrohrmaterialien (Grauguß, duktiler Guß, Stahl, PVC, Asbestzemt) und alle Neurohrmaterialien (Stahl, duktiler Guß und HDPE) geeignet sein bei Rohrdimensionen von DN 80 bis 500. Die Austauschlänge sollte auch bei größeren Rohrdurchmessern bis zu 120 m in einem Arbeitsgang liegen und doch so schnell durchgeführt werden können, daß teure Notversorgungen entfallen. Schließlich soll das Altrohr einschließlich aller Rohrbegleitstoffe komplett entfernt werden können und ggfs. der Leitungskanal soweit aufgeweitet werden können, daß sich selbst bei Schutzrohreinsatz eine Dimensionsvergrößerung des Neurohrs gegenüber dem Altrohr um mindestens eine Nennweite ergibt. Das Verfahren sollte auch in Wasserschutzgebieten eingesetzt werden können.

Diese Aufgabe wird mit einem Verfahren der eingangs genannten Art gelöst, bei dem die auszutauschende Versorgungsleitung in einer Start- und einer Zielbaugrube zugänglich gemacht und geöffnet wird, wobei in die auszutauschende Versorgungsleitung ein Windenseil eingebracht wird, in der Startbaugrube eine Bodenrakete installiert wird, die die auszutauschende Leitung stirnseitig in einer Aufnahme aufnimmt und mit dem Windenseil verbunden ist, rückseitig mit der einzubringenden Leitung oder einem Leitungselement versehen ist sowie eine Vortriebsteinrichtung aufweist, und die Bodenrakete mit dem Windenseil und über die Vortriebseinrichtung die auszutauschende Leitung zur Zielbaugrube hin austreibt und die einzubringende Leitung einzieht.

Erfindungsgemäß wird unter dem Begriff 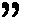 Versorgungsleitung" eine jede Leitung verstanden, die Haushalte und/oder Betriebe mit Versorgungsgütern flüssiger oder gasförmigerArt versorgt und flüssige oder gasförmige Abfälle abführt. In der Regel handelt es sich dabei um Frischwasser-, Gas- oder Abwassserleitungen, jedoch können auch Leitungen zur Versorgung chemischer Betriebe mit Rohstoffen oder Fernwärmeleitungen darunter verstanden werden.

Das erfindungsgemäße Verfahren beruht auf dem Einsatz einer Bodenrakete, die aber im Gegensatz zu denen des Standes der Technik das zu entfernende Rohr nicht sprengt oder zum Bersten bringt, sondern als Einheit aus dem Leitungskanal austreibt. Die Bodenrakete wird zum einen auf übliche Weise angetrieben, beispielsweise pneumatisch, hydraulisch oder auch elektrisch, wobei Raumstöße erzeugt und über einen Spezialkopf auf das Rohrende übertragen werden, und zum anderen durch das durch die zu entfernende Versorgungsleitung gezogene Windenkabel gezogen, das die Rakete ergänzend unter Zugspannung hält, sodaß die treibende Kraft der Rakete durch die Zugkraft einer Winde unterstützt wird.

Im einzelnen wird so vorgegangen, daß die zu entfernende Versorgungsleitung durch eine Start- und eine Zielbaugrube zugänglich gemacht wird. Diese Baugruben befinden sich in einem Abstand zueinander, der durchaus 120 betragen kann, im wesentlichen aber durch die örtlichen Umstände bestimmt wird. Zweckmäßigerweise werden die Baugruben dort angebracht, wo die Versorgungsleitungen Anschlüsse oder Abzweigungen aufweisen.

Die Bodenrakete wird in die Startbaugrube eingebracht und auf das zuvor aufgeschnittene Rohr aufgesetzt, wobei das Rohr in ein stirnseitige Aufnahme eingepaßt wird. Ein durch die Versorgungsleitung von der Zielbaugrube zur Startbaugrube geführtes Windenseil wird mit dem Kopf der Bodenrakete verbunden und von der Zielbaugrube her über eine Spillwinde und eine in der Zielbaugrube angeordnete Umlenkvorrichtung unter Zugspannung gesetzt. Rückseitig am Kopf der Bodenrakete befindet sich das in den Leitungskanal einzubringende neue Leitungs- oder Schutzrohr, durch das auch die zum Betrieb der Bodenrakete benötigten Leitungen geführt werden. Die Rammstöße der Bodenrakete werden auf die auszutauschende Leitung übertragen, wobei die Schubwirkung durch die Zugwirkung der Spillwinde unterstützt wird. Das Rohr wird als ganzes, d. h. unzerstört, aus dem Leitungskanal gezogen bzw. getrieben, wobei gleichzeitig mit der Rakete das neue Rohr eingezogen wird.

Im Falle der Kapazitätsvergrößerung ist es zweckmäßig, die Rakete mit einem Aufweitmantel zu versehen, der den Nenndurchmesser des Leitungskanals auf die gewünschte Größe aufweitet.

Insbesondere bei größeren Längen der auszutauschenden Leitung ist es bevorzugt, die Rammstöße der Bodenrakete auf das auszutreibende Rohr zu dämpfen. Hierfür kann in der Aufnahme, die die Verbindung zum auszutreibenden Rohr herstellt, ein Dämpfungselement vorgesehen sein.

Die beispielsweise mit einer Spillwinde ausgeübte Zugkraft auf die Bodenrakete erfüllt mehrere Zwecke. Zum einen sorgt sie für die richtige Ausrichtung der Bodenrakete. Die vorzugsweise konstante Zugspannung unterstützt ferner den Raketenvortrieb und damit das Ausbringen des Rohrs. Nicht zuletzt dient das Windenseil aber auch dazu, einen festen Kontakt zwischen Bodenrakete und auszubringendem Rohr zu gewährleisten, sodaß die einzelnen Rammstöße nicht in einem Leerraum zwischen Rakete und Rohr verpuffen.

Das erfindungsgemäße Verfahren kann dazu dienen, eine fertige Rohrleitung oder Leitungselemente einzuführen, aber auch dazu, ein sogenanntes Schutzrohr, in das dann die eigentliche Leitung eingebracht wird, zu installieren. Ein solches Schutzrohr ist eine zusätzliche Sicherung gegen das unkontrollierte Austreten der Versorgungsgüter, vermindert Besschädigungen von außen und erleichtert ein evtl. später wieder erforderlich werdendes Austauschen der Versorgungsleitungen.

Die auszubringende Versorgungsleitung wird zweckmäßigerweise in der Zielbaugrube mit einer dort angeordneten üblichen Zerkleinerungs-, insbesondere Spaltvorrichtung zerlegt und stückweise entsorgt. Die Zerlegung und Entsorgung kann auch über eine Zwischenbaugrube erfolgen, die sich zwischen Start- und Zielbaugrube befindet.

Eine Bodenrakete zur Durchführung des Verfahrens weist auf einem Raketenkörper einen speziell gestalteten Kopf auf, der eine Aufnahme für das auszutreibende Leitungsrohr aufweist sowie einen Ansatz für das Windenseil.

Die Aufnahme besteht zweckmäßigerweise aus einem rohrförmigen Vorsatz, der geringfügig weiter ist als die auszutauschende Versorgungsleitung und diese mit ihrem angeschnittenen Ende in sich aufnimmt. Alternativ kommt auch ein rohr- oder zylinderförmiger Vorsatz in Frage, der in das auszutreibende Rohr hineinragt und einen etwas kleineren Durchmesser als die freie Rohrweite der auszutauschenden Leitung aufweist. Die auszutauschende Versorgungsleitung wird dabei auf einem Vorsprung abgestüzt, der zweckmäßigerweise mit einem Pufferelement belegt ist, beispielsweise einem Gummiring.

Der Kopf der Bodenrakete ist zweckmäßigerweise austauschbar ausgelegt und mit einem oder mehreren Bolzen an der Rakete gesichert. Einer dieser Bolzen kann dabei als Ansatz für das Windenseil dienen. Der Kopf ist größenmäßig an den Durchmesser des auszutreibenden Rohres angepaßt und weist vorzugsweise einen rückwärts weisenden erweiterten Mantel auf für den Fall, daß der Leitungskanal aufgeweitet werden soll. Bei größerer Aufweitung des Leitungskanals ist eine konische Aufweitung des Mantels zweckmäßig. Es ist besonders zweckmäßig, eine übliche Bodenrakete mit einer Mehrzahl von Köpfen bereitzustellen, die auf den jeweiligen Normdurchmesser des auszutreibenden und des einzubringenden Rohres abgestellt sind. Das einzubringende Rohr, vorzugsweise ein elastisches Schutzrohr aus HDPE (High Density Polyethylene) ist am rückwärtigen Ende des Raketenkopfes bzw. Mantels der Rakete angeordnet und wird mit dem Vortrieb der Rakete in den Leitungskanal eingezogen.

Die Erfindung wird durch die beiliegenden Abbildungen näher erläutert. Von diesen zeigt
Fig.1 den Kopf einer Bodenrakete im Längsschnitt und
Fig. 2 schematisch das erfindungsgemäße Verfahren.

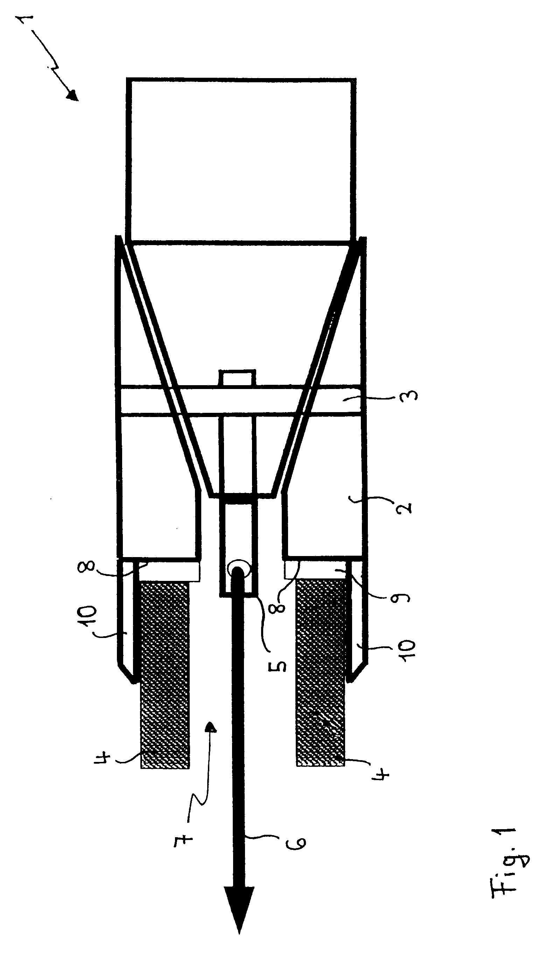

Die Bodenrakete 1 gemäß Fig. 1 weist einen mit Hilfe eines Bolzens 3 gesicherten Raketenkopf 2 auf, der die an ihrer Spitze konisch zulaufende Rakete 1 konzentrisch umgibt. Der Raketenkopf 2 weist dabei im rückwärts weisenden Mantelbereich einen Durchmesser auf, der den Durchmesser des auszutauschenden Rohres 4 übersteigt. Ein Ansatz 5 dient der Befestigung des Windenseils 6, wobei der Ansatz 5 selbst an dem Bolzen 3 gesichert ist.

Der Raketenkopf 2 weist stirnseitig eine Aufnahme 7 für das auszutauschende Rohr 4 auf, das sich mit seiner Rohrwandung auf einem konzentrischen Vorsprung 8 abstützt. Ein Dampfungselemt oder Puffer 9, beispielsweise aud Gummi, dient dazu, die Rammstöße der Rakete auf das Altrohr 4 abzupuffern. Eine vorgezogenes Rohrelement 10 dient dazu, das Altrohr 4 in seiner Position zu fixieren; entsprechend weist es einen inneren Durchmesser auf, der den äußeren Durchmesser des Altrohres 4 geringfügig übersteigt.

Das einzubringende Rohr wird zweckmäßigerweise am Ende der Bodenrakete 1 oder aber am rückwärtigen Ende des Raketenkopfs 2 befestigt (nicht gezeigt). Bei starker Aufweitung des Leitungskanals ist es zweckmäßig, den Aufweitmantel des Kopfes so auszulegen, daß er sich zum Raketenende hin konisch erweitert, um die Aufweitung zu erleichtern.

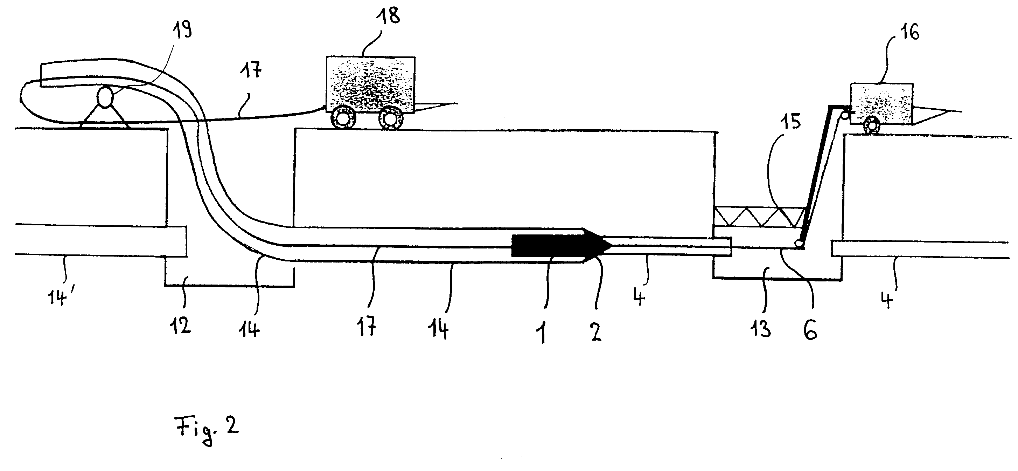

Fig. 2 zeigt das erfindungsgemäße Verfahren, bei dem ein Altrohr 4 durch ein neues Schutzrohr 14 ersetzt wird. Die Bodenrakete 1 mit dem Raketenkopf 2 wird zum einen über das Windenseil 6 und eine Umlenkvorrichtung 15 in der Zielbaugrube 13 zur Spillwinde 16 geführt, die die Bodenrakete unter konstante Zugspannung setzt. Die Bodenrakete selbst weist am hinteren Ende eine Versorgung 17 auf, mit der im gegeben Fall Preßluft vom Kompressor 18 zugeführt wird. Die Leitung 17 wird durch das einzubringende Rohr 14 geführt, das selbst über einen Rollenbock 19 in die Startbaugrube 12 geführt wird. Das neue Rohr 14 weist dabei eine größere Nennweite auf als das Altrohr 4Nach Beendigung des Einziehverfahrens wird das neue Rohr 14 mit dem bereits vorhandenen neuen Rohr 14' des vorhergehenden Bauabschnitts in üblicher Weise verbunden, beispielsweise verschweißt.

## Patentansprüche

1. Verfahren zum Austausch einer im Boden verlegten Versorgungsleitung, bei dem die auszutauschende Versorgungsleitung (4) in einer Start- (12) und einer Zielbaugrube (13) zugänglich gemacht und geöffnet wird, dadurch gekennzeichnet, daß in die auszutauschende Versorgungsleitung (4) ein Windenseil (6) eingebracht wird, in der Startbaugrube (12) eine Bodenrakete (1) installiert wird, die die auszutauschende Leitung (4) stirnseitig in einer Aufnahme aufnimmt und mit dem Windenseil (6) verbunden ist, rückseitig mit der einzubringenden Leitung (14) oder einem Leitungselement versehen ist sowie eine Vortriebseinrichtung aufweist, und die Bodenrakete (1) mit Hilfe des Windenseils (6) und der Vortriebseinrichtung die auszutauschende Leitung (14) zur Zielbaugrube (13) hin austreibt und die einzubringende Leitung (14) einzieht.

2. Verfahren nach Anspruch 1, dadurch gekennzeichnet, daß die auszutauschende Leitung (14) unter Aufweiten des Leitungskanals ausgetrieben wird.

3. Verfahren nach Anspruch 1 oder 2, dadurch gekennzeichnet, däß die auszutauschende Versorgungsleitung (4) über ein Dämpfungselement in der Aufnahme gelagert wird.

4. Verfahren nach einem der vorstehenden Ansprüche, dadurch gekennzeichnet, daß die Bodenrakete (1) über einen kompressorbetriebenen pneumatischen Vortrieb verfügt.

5. Verfahren nach einem der vorstehenden Ansprüche, dadurch gekennzeichnet, daß das Windenseil (6) unter konstanter Zugspannung gehalten wird.

6. Verfahren nach einem der vorstehenden Ansprüche, dadurch gekennzeichnet, daß ein Schutzrohr (14) in den Leitungskanal eingebracht wird.

7. Verfahren nach einem der vorstehenden Ansprüche, dadurch gekennzeichnet, daß das auszutauschende Rohr (4) in der Zielgrube aufgespalten wird.

8. Verfahren nch einem der Ansprüche 1 bis 6, dadurch gekennzeichnet, daß das auszutauschende Rohr in einer Zwischenbaugrube aufgespalten wird.

9. Bodenrakete zur Durchführung des Verfahrens nach einem der vorstehenden Ansprüche, gekennzeichnet, durch einen Kopf (2) , der stirnseitig eine Aufnahme (7) für eine auszutauschende Versorgungsleitung (4) aufweist sowie einen Ansatz (5) für ein Windenseil (6).

10. Bodenrakete nach Anspruch 9, dadurch gekennzeichnet, daß der Kopf (2) austauschbar und mit einem oder mehreren Bolzen (3) an der Rakete (1) gesichert ist.

11. Bodenrakete nach Anspruch 10, dadurch gekennzeichnet, daß das Windenseil (6) an einem der Bolzen (13) gesichert ist.

12. Bodenrakete nach einem der Ansprüche 9 bis 11, dadurch gekennzeichnet, daß der Kopf (2) einen gegenüber der Aufnahme (7) erweiterten aufweitende Durchmesser aufweist.

13. Bodenrakete nach einem der Ansprüche 9 bis 12, dadurch gekennzeichnet, daß in der Aufnahme (7) für das auszutauschende Leitungsrohr (4) auf einem Vorsprung (8) ein Pufferelement (9) vorgesehen ist.

14. Bodenrakete nach Anspruch 13, gekennzeichnet durch einen Gummiring (9) als Puffer.

15. Bodenrakete nach einem der Ansprüche 9 bis 14, dadurch gekennzeichnet, daß die Aufnahme (8) eine ringförmige Wanderung (10) aufweist, die die auszutauschende Leitung (4) aufnimmt.
